# EUROPEAN PATENT SPECIFICATION

(11) **EP 1 641 418 B1**
(45) Date of publication and mention of the grant of the patent: **27.01.2010**
(21) Application number: 03786201.8
(22) Date of filing: 10.12.2003
(51) Int. Cl.: A61G 3/02, B60P 3/32

(54) **DEVICE TO IMPROVE THE MOBILITY OF MOTOR-DISABLED PERSONS IN A RECREATIONAL VEHICLE AND A RELATED VEHICLE**
VORRICHTUNG ZUR MOBILITÄTSVERBESSERUNG DER BEWEGUNGSBEHINDERTEN IN FREIZEITFAHRZEUGEN UND ENTSPRECHENDES FAHRZEUG
DISPOSITIF POUR AMELIORER LA MOBILITE DE PERSONNES PRESENTANT UN HANDICAP MOTEUR DANS UN VEHICULE DE CAMPING ET VEHICULE ASSOCIE

(30) Priority: 05.03.2003 IT RM20030097
(43) Date of publication of application: 05.04.2006
(73) Proprietor: Ippocamper S.r.l., 02043 Contigliano RI (IT)
(72) Inventor: Tempesta, Marco, 02100 Rieti RI (IT)
(74) Representative: Papa, Elisabetta
(86) International application number: PCT/IT2003/000811
(87) International publication number: WO 2004/078088

(56) References cited:
- EP-A- 0 390 003
- FR-A- 2 553 046
- GB-A- 2 386 351
- US-A- 4 809 372

## Description

The present invention relates to devise for the mobility of the motor-disabled in a vehicle according to the preamble of claim 1, to a vehicle comprising such a device and to an assemby kit compressing such a device. In particular, the invention relates to recreational vehicles like, e.g., campers, trailers, watercrafts, or also trains, pullmans, vans, buses, trams, aircrafts and the like.

Devices for the motor-disabled are known which are apt to allow to the latter access to various motor vehicles, like, e.g., cars, buses, or other recreational vehicles like trailers, campers, etc.

However, to date devices allowing an effective livability of the inner spaces of said recreational vehicles - like, e.g., corridors, bathroom, possible restaurant or bar, possible kitchen, etc. - to the motor-disabled are unavailable. In other words, the basic problem still awaiting an effective solution is to provide to the disabled the option of autonomously moving inside the vehicle, performing all those functions deemed 'normal' by normally-abled users, like, e.g., moving, sleeping, washing oneself, eating in a bar or restaurant, cooking, etc.

At present, the only solution to ensure such a mobility in the inner living spaces of a vehicle of the aforementioned type is to design the vehicle itself so that said inner spaces be of a width above standard, and in particular such as to allow the passage of the disabled person wheelchair and a mobility of the latter sufficient for the full use of the vehicle. However, such a need to design and construct specially made recreational vehicles entails increased costs and construction times. Moreover, given the variety of typologies and of seriousness levels in which a motor disability can reveal itself, a design and a construction standardized for any motor-disabled are not necessarily possible or anyhow satisfactory. For this purpose, suffice it to consider that countless wheelchair designs exist, each one with its specific dimensions, and, moreover, that not all motor-disabled use a wheelchair, as they can avail themselves, e.g., of various orthoses.

EP 0 390 003 discloses a mobile apparatus for transporting disabled persons who are to be lifted, lowered or moved horizontally. The apparatus consists of a straight hollow section which is open at the bottom and in which a trolley driven via a rotating toothed belt is horizontally displaceable and has two deflection rollers for the supporting belt of a supporting element accommodating the disabled person. The apparatus can be attached to and detached from walls, ceilings and pillars, also in motor vehicles.

Therefore, the technical problem underlying the present invention is to provide a device for the mobility of the motor-disabled in a recreational vehicle and a related vehicle overcoming the drawbacks hereto mentioned with reference to the known art. This problem is solved by an aid according to claim 1.

According to the same inventive concept, the present invention further relates to a recreational vehicle according to claim 25 and to a kit according to claim 24.

The expression 'recreational vehicle' should here be construed in its broadest meaning, it being meant to encompass trailers, campers, watercrafts, trains, pullmans, vans, buses, trams, aircrafts, and so on.

Preferred features of the present invention are provided in the dependant claims thereof.

The present invention provides several relevant advantages. One of the main advantages is that it allows a full livability of the inner spaces of a recreational vehicle to the motor-disabled, with no need for the vehicle to be specifically redesigned for his/her needs. In fact, by virtue of its very structure the device of the invention is very versatile and can effectively be installed on existent vehicles, which therefore become suitable not merely for the normally able subjects, but also for the motor-disabled. Moreover, the device is of simple and cost-effective construction and installation.

Other advantages, features and the modes of employ of the present invention will be made apparent in the following detailed description of some embodiments thereof, given by way of a non-limiting example. Reference will be made to the annexed drawings, wherein:
Figure 1 shows a perspective view of the outer portion of the compartment of a recreational vehicle according to an embodiment of the present invention;
Figure 2 shows a perspective view of the inner living space of the vehicle of Figure 1 in which there is installed a device according to the invention; and
Figure 2A shows a detail of the device of Figure 2.

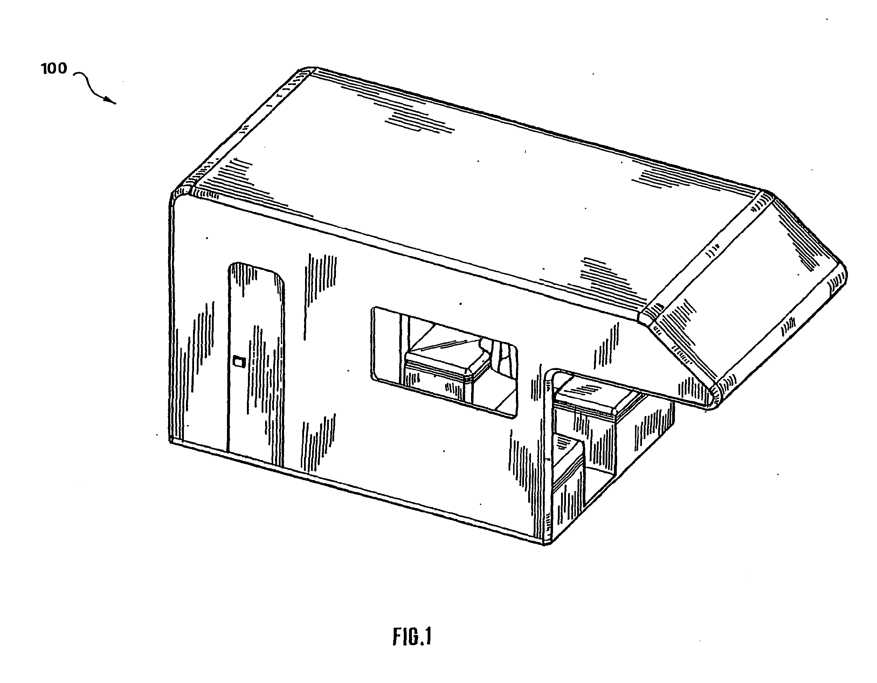

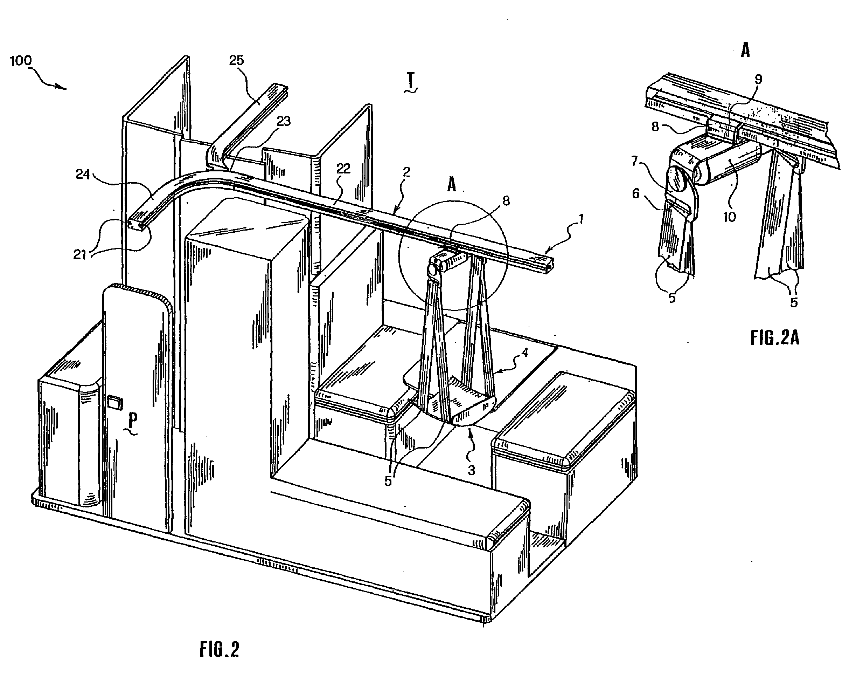

With initial reference to Figures 1 and 2, a recreational vehicle according to a preferred embodiment of the invention is generally indicated by 100. In the example considered here, such a vehicle is a camper.

According to the invention, on the camper 100 there is installed an aid 1 for the mobility of the motor-disabled in the camper itself.

The aid 1 comprises first of all a guide 2, and in particular a track, secured at the ceiling or roof T of the camper 100 and defining a path that substantially extends across the entire top wall of the inner living space of the recreational vehicle 100. Preferably, the track 2 extends also into the cab, in order to ease the access of the disabled directly from the front doors, thereby avoiding additional specifically-designed and costly devices.

The track 2 has a pair of side grooves 21 apt to slidably receive a slider 8 which will be described later on.

The track 2 of the present embodiment defines a substantially Y-shaped path, being formed of a main arm 22 branching, at an interchange node 23, into two secondary arms 24 and 25. One of said arms, and precisely the arm 24 in Figure 2, extends near the access door P of the camper 100.

Of course, variant embodiments can provide a different implementation for the tracks. For example, the aforementioned slider could be coupled externally to the track itself.

Further variant embodiments can then provide guide means alternative to the track hereto considered.

The aid 1 further provides a seat 3 apt to support a user's body, coupled to the track 2 by suitable means for coupling - generally indicated by 4 - so that the seat 3 itself be mobile along the track 2.

In the present embodiment the means 4 for coupling comprises a pair of lengthwise-adjustable belts 5, each arranged in an U-shape and having both ends thereof secured on a same side of the seat 3.

As it is detailed in Figure 2A, the throat of the U is instead received into a respective eyelet 6 of a respective bracket 7. Moreover, each bracket 7 is secured to the abovementioned common slider 8. The latter has a pair of substantially horizontally developing side wings 9 (only one shown in Figure 2A), each apt to slidably engage a respective groove 21 of the track 2.

Therefore, the overall arrangement is such that the means 4 for coupling allow the seat 3 to be suspended to the track 2 and to translate in a substantially horizontal direction therealong.

Moreover, according to a preferred variant embodiment, the means 4 for coupling are apt to allow, besides said translatory motion, also a rotational motion of the seat 3 about a substantially vertical axis of the seat 3 - coupling means 4 assembly, so as to further improve the user's mobility inside the living space of the camper 100. This degree of rotational freedom of the seat 3 with respect to the track 2 can easily be implemented by introducing a pivotable connection of the bracket system 7 to the slider 8.

The aid 1 of the present embodiment further comprises means for moving, apt to move the seat 3 along the track 2, said means being implemented, in the present embodiment, by a motor drive 10, e.g. a conventional electric motor, arranged at the slider 8.

According to the abovementioned preferred variant embodiment, the aid 1 may also comprise a motor drive apt to produce a rotary motion of the seat 3 about the vertical axis.

Moreover, preferably the aid 1 provides also means for moving, e.g. in form of a specific, electric, electromechanical, pneumatic, etc., actuator associated with the system for adjusting the height to ground of the seat 3, a system that in the present embodiment is implemented by said adjustable-length belts 5. This additional assisted moving can facilitate the user's access to the camper 100, as it will be illustrated also later on with reference to the modes of employ of the aid 1.

Preferably, the means for moving employed to produce the translation and/or rotation of the seat 3 with respect to the track 2 and/or said lowering/lifting of the seat 3 itself with respect to the ground are remotely controlled, so as to easily be operated by a disabled user.

The operation steps of the aid 1, though probably already apparent from the preceding description, will be made clearer hereinafter, with reference to the hereto-introduced figures.

First of all, the user may sit on the seat 3 already at the camper entrance, i.e. near the door P thereof, by virtue of the specific arrangement of the arm 24 of the track 2. Advantageously, the aid 1 may comprise also a lifting system - implementable by conventional means - arranged at the door P, so that a user unaided by third parties may directly pass from a wheelchair to the seat 3 when accessing the camper 100.

Such an access to the camper 100 may also be facilitated by the abovementioned system for adjusting the height to ground of the seat 3 integrated with the already cited dedicated means for moving.

Then, the user, by means of any kind of remote control, can operate the motor drive 10 and move for a desired distance and according to a desired path along the track 2, optionally, in the aforementioned variant, selecting also a rotary motion about the vertical axis of the seat 3. The abovementioned remote control, besides the conventional key type, may also be, e.g., of voice type or of a type apt to exploit the residual motor abilities of the disabled user.

As mentioned above, the track 2 defines a path extending across the entire living space of the camper 100, covering all premises of the latter. Therefore, the user may fully access all services and living areas of the camper 100.

Moreover, variant embodiments could provide the track 2 to have any development alternative to the hereto-considered Y one, in order to allow said full access to all the living space of the camper 100. In particular, the track 2 can define a plurality of alternative paths, optionally intersecting in one or more interchange nodes.

Moreover, with the interchange node 23 of the hereto-considered main embodiment, or with each interchange nodes of the just mentioned variant, there may be associated automatic switching mechanisms, easily implementable by a person skilled in the art. Furthermore, according to a further variant the guide of the invention may also provide tracts not horizontal, but, e.g., vertical or tilted, thereby allowing access to raised areas of the camper 100.

Hence, it will be appreciated that the aid according to the invention allows the disabled user to effectively and easily move within the living space of the recreational vehicle with no need for a wheelchair.

Moreover, it will be understood that the aid of the invention might be useful also in the case of a user on a wheelchair whishing to make his/her recreational vehicle accessible, but whose vehicle features be incompatible or inconvenient to a radical structure change thereof. Hence, this aid allows overcoming the so-called 'bottlenecks' .

It will be understood that the present invention is susceptible of several embodiments and variants alternative to what has been described hereto, some of which will briefly be illustrated hereinafter with reference to the sole aspects differentiating it from what has been considered hereto.

First of all, the guide of the invention needs not necessarily be installed or extend only in a top region of the living space of the vehicle, as it may well have the hereto-cited vertical or tilted sections, or even portions extending at parallel horizontal planes or in correspondence of the floor.

Moreover, the recreational vehicle could also differ from a camper, being e.g. a trailer, a cabin watercraft, a train, a pullman, a van, a bus, a tram, an aircraft, etc. Furthermore, the seat may be replaced by different seating means, suitable for the specific typology and seriousness of the user's motor disability, or even by means apt to support a user in an upright posture, like, e.g., a harness.

Lastly, it will be understood that although the device has hereto been described with reference to a configuration thereof installed on a recreational vehicle, the former may be provided to a user also in form of an assembly kit preset for installation on the latter.

The present invention was hereto described with reference to preferred embodiments thereof. It is understood that there may be other embodiments, afferent to the same inventive kernel, all falling within the protective scope of the appended claims.

## Claims

1. An aid (1) for the mobility of the motor-disabled in a recreational vehicle (100) like, e.g., a camper, a trailer, a watercraft, a train, a bus and the like, comprising:
- a guide (2), apt to be installed in the living space of the recreational vehicle (100) and extending in said space; and
- supporting means (3) apt to receive a user's body, coupled or couplable to said guide (2) so as to be mobile along the latter, the arrangement being such that the user, supported on said supporting means (3), can move within the living space of the recreational vehicle (100),
**characterized in that** said guide (2) is apt to define a plurality of alternative paths (24, 25) extending into the living space of the recreational vehicle (100).

2. The aid (1) according to claim 1, wherein said guide (2) is apt to be installed in a top portion (T) of the living space of the recreational vehicle (100).

3. The aid (1) according to the preceding claim 2, wherein said guide (2) is apt to be installed at the ceiling (T) of the recreational vehicle (100).

4. The aid (1) according to claim 2 or 3, wherein said guide (2) is apt to substantially extend across the entire top portion (T) of the living space of the recreational vehicle (100), so as to cover all premises of the latter.

5. The aid (1) according to any of the preceding claims, wherein said alternative paths (24, 25) intersect in one or more interchange nodes (23) of said guide (2).

6. The aid (1) according to any one of the preceding claims, comprising means (4) for coupling said supporting means (3) to said guide (2), apt to allow, when the aid (1) is installed in the recreational vehicle (100), a translatory motion in a substantially horizontal direction of the former (3) with respect to latter (2).

7. The aid (1) according to any one of the preceding claims, comprising means (4) for coupling said supporting means (3) to said guide (2), apt to allow, when the aid (1) is installed in the recreational vehicle (100), a translatory motion in a substantially vertical direction of the former (3) with respect to the latter (2).

8. The aid (1) according to any one of the preceding claims, comprising means (4) for coupling said supporting means (3) to said guide (2), apt to allow, when the aid (1) is installed in the recreational vehicle (100), a rotational motion of the former (3) with respect to the latter (2).

9. The aid (1) according to any one of the preceding claims, comprising means (4) for coupling said supporting means (3) to said guide (2), apt to allow the former (3) to be suspended to the latter (2).

10. The aid (1) according to any one of the preceding claims, wherein said guide comprises at least one track (2).

11. The aid (1) according to the preceding claim 10, comprising a slider (8) apt to engage said at least one track (2) to couple said supporting means (3) to said guide (2).

12. The aid (1) according to any one of the preceding claims, wherein said supporting means (3) is apt to support a user in a seated position.

13. The aid (1) according to the preceding claim 12, wherein said supporting means comprises a seat (3).

14. The aid (1) according to any one of the preceding claims, wherein said supporting means (3) is apt to support a user in an upright posture.

15. The aid (1) according to any one of the preceding claims, wherein said supporting means (3) comprises a harness.

16. The aid (1) according to any one of the preceding claims, comprising means (5) for adjusting the height to ground of said supporting means (3).

17. The aid (1) according to the preceding claim 16, wherein said means for adjusting the height comprises a system of adjustable-length belts (5).

18. The aid (1) according to claim 16 or 17, wherein said means (5) for adjusting comprises an actuator.

19. The aid (1) according to any one of the preceding claims, comprising means (10) for moving said supporting means (3) with respect to said guide (2).

20. The aid (1) according to the preceding claim 19, wherein said means (10) for moving are apt to produce a translatory motion of said supporting means (3) along said guide (2).

21. The aid (1) according to claim 19 or 20, wherein said means (10) for moving are apt to produce a rotary motion of said supporting means (3) with respect to said guide (2).

22. The aid (1) according to any one of the claims 19 to 21, wherein said means for moving comprises an electric motor (10).

23. The aid (1) according to any one of the claims 19 to 22, wherein said means (10) for moving are remotely controlled.

24. An assembly kit comprising an aid (1) according to any one of the preceding claims preset for installation on a recreational vehicle (100) like, e.g., a camper, a trailer, a watercraft, a train, a bus and the like.

25. A recreational vehicle (100) like, e.g., a camper, a trailer, a watercraft, a train, a pullman, a van, a bus, a tram, an aircraft and the like, comprising an aid (1) for the mobility of the motor-disabled in the vehicle itself according to any one of claims 1 to 23, wherein said guide (2) is installed in the living space of the recreational vehicle (100) and extends in such space.

26. The vehicle (100) according to claim 25, wherein said guide (2) comprises a portion arranged near to an access door (P) of the vehicle itself

27. The vehicle (100) according to the preceding claim 26, comprising a lifting system to allow the disabled subject to access the vehicle itself.

28. The vehicle (100) according to any one of the claims 25 to 27, wherein said guide (2) extends also in the driving compartment thereof.

29. The vehicle (100) according to any one of the claims 25 to 28, which is a vehicle selected in a group comprising: campers, trailers, watercrafts, trains, aircrafts, buses, trams, pullmans and vans.

## Patentansprüche

1. Hilfe (1) für die Mobilität von Bewegungsbehinderten in einem Erholungsfahrzeug (100) wie zum Beispiel einem Wohnmobil, einem Wohnwagen, einem Wasserfahrzeug, einer Eisenbahn, einem Bus und dgl., mit:
- einer Führung (2), die in dem Wohnraum des Erholungsfahrzeuges (100) installiert werden kann, um sich durch den Wohnraum zu erstrecken; und
- einer Trageinrichtung (3), die dafür ausgebildet ist, den Körper des Benutzers aufzunehmen, gekoppelt oder koppelbar mit der Führung (2), so dass sie längs derselben beweglich ist, wobei die Anordnung so getroffen ist, dass der Benutzer, getragen durch die Trageinrichtung (3), sich in dem Wohnraum des Erholungsfahrzeuges (100) bewegen kann,
**dadurch gekennzeichnet, dass** die Führung (2) dafür ausgebildet ist, mehrere alternative Bahnen (24, 25) zu bilden, die sich in den Wohnraum des Erholungsfahrzeuges (100) erstrecken.

2. Hilfe (1) nach Anspruch 1, wobei die Führung (2) dafür ausgebildet ist, in einem oberen Teil (T) des Wohnraums des Erholungsfahrzeuges (100) installiert zu werden.

3. Hilfe (1) nach dem vorhergehenden Anspruch 2, wobei die Führung (2) dafür ausgebildet ist, an der Decke (T) des Erholungsfahrzeuges (100) installiert zu werden.

4. Hilfe (1) nach Anspruch 2 oder 3, wobei die Führung (2) dafür ausgebildet ist, sich im Wesentlichen durch den gesamten oberen Teil (T) des Wohnraums des Erholungsfahrzeuges (100) zu erstrecken, um so alle Bereiche von letzterem abzudecken.

5. Hilfe (1) nach einem der vorhergehenden Ansprüche, wobei sich die alternativen Bahnen (24, 25) an einer oder mehreren Überleitungsstellen (23) der Führung (2) schneiden.

6. Hilfe (1) nach einem der vorhergehenden Ansprüche, mit einer Einrichtung (4) zum Koppeln der Trageinrichtung (3) mit der Führung (2), welche dafür ausgebildet ist, dann, wenn die Hilfe (1) in dem Erholungsfahrzeug (100) installiert ist, eine translatorische Bewegung in einer im Wesentlichen horizontalen Richtung der Trageinrichtung (3) in Bezug auf die Führung (2) zu erlauben.

7. Hilfe (1) nach einem der vorhergehenden Ansprüche, mit einer Einrichtung (4) zum Koppeln der Trageinrichtung (3) mit der Führung (2), welche dafür ausgebildet ist, dann, wenn die Hilfe (1) in dem Erholungsfahrzeug (100) installiert ist, eine translatorische Bewegung in einer im Wesentlichen vertikalen Richtung der Trageinrichtung (3) in Bezug auf die Führung (2) zu erlauben.

8. Hilfe (1) nach einem der vorhergehenden Ansprüche, mit einer Einrichtung (4) zum Koppeln der Trageinrichtung (3) mit der Führung (2), welche dafür ausgebildet ist, dann, wenn die Hilfe (1) in dem Erholungsfahrzeug (100) installiert ist, eine Drehbewegung der Trageinrichtung (3) in Bezug auf die Führung (2) zu erlauben.

9. Hilfe (1) nach einem der vorhergehenden Ansprüche, mit einer Einrichtung (4) zum Koppeln der Trageinrichtung (3) mit der Führung (2), welche dafür ausgebildet ist, das Aufhängen der Trageinrichtung (3) an der Führung (2) zu erlauben.

10. Hilfe (1) nach einem der vorhergehenden Ansprüche, wobei die Führung (2) wenigstens ein Gleis umfasst.

11. Hilfe (1) nach dem vorhergehenden Anspruch 10, mit einem Gleiter (8), der dafür ausgebildet ist, das wenigstens eine Gleis (2) zu erfassen, um die Trageinrichtung (3) mit der Führung (2) zu koppeln.

12. Hilfe (1) nach einem der vorhergehenden Ansprüche, wobei die Trageinrichtung (3) dafür ausgebildet ist, einen Benutzer in einer sitzenden Position zu tragen.

13. Hilfe (1) nach dem vorhergehenden Anspruch 12, wobei die Trageinrichtung einen Sitz (3) umfasst.

14. Hilfe (1) nach einem der vorhergehenden Ansprüche, wobei die Trageinrichtung (3) dafür ausgebildet ist, einen Benutzer in einer aufrechten Haltung zu tragen.

15. Hilfe (1) nach einem der vorhergehenden Ansprüche, wobei die Trageinrichtung (3) ein Gurtzeug umfasst.

16. Hilfe (1) nach einem der vorhergehenden Ansprüche, mit einer Einrichtung (5) zum Einstellen der Höhe der Trageinrichtung (3) über dem Boden.

17. Hilfe (1) nach dem vorhergehenden Anspruch 16, wobei die Einrichtung zum Einstellen der Höhe ein System von in der Länge einstellbaren Gurten (5) umfasst.

18. Hilfe (1) nach Anspruch 16 oder 17, wobei die Einrichtung (5) zum Einstellen einen Stellantrieb umfasst.

19. Hilfe (1) nach einem der vorhergehenden Ansprüche, mit einer Einrichtung (10) zum Bewegen der Trageinrichtung (3) in Bezug auf die Führung (2).

20. Hilfe (1) nach dem vorhergehenden Anspruch 19, wobei die Einrichtung (10) zum Bewegen dafür ausgebildet ist, eine translatorische Bewegung der Trageinrichtung (3) längs der Führung (2) zu erzeugen.

21. Hilfe (1) nach Anspruch 19 oder 20, wobei die Einrichtung (10) zum Bewegen dafür ausgebildet ist, eine Drehbewegung der Trageinrichtung (3) in Bezug auf die Führung (2) zu erzeugen.

22. Hilfe (1) nach einem der Ansprüche 19 bis 21, wobei die Einrichtung zum Bewegen einen Elektromotor (10) umfasst.

23. Hilfe (1) nach einem der Ansprüche 19 bis 22, wobei die Einrichtung (10) zum Bewegen ferngesteuert ist.

24. Bausatz mit einer Hilfe (1) nach einem der vorhergehenden Ansprüche, voreingestellt auf die Installation in einem Erholungsfahrzeug (100) wie zum Beispiel einem Wohnmobil, einem Wohnwagen, einem Wasserfahrzeug, einer Eisenbahn, einem Bus und dgl.

25. Erholungsfahrzeug (100) wie zum Beispiel ein Wohnmobil, ein Wohnwagen, ein Wasserfahrzeug, eine Eisenbahn, ein Pullmanwagen, ein Kleinbus, ein Bus, eine Straßenbahn, ein Flugzeug und dgl., mit einer Hilfe (1) für die Mobilität von Bewegungsbehinderten in dem Fahrzeug selbst nach einem der Ansprüche 1 bis 23, wobei die Führung (2) in dem Wohnraum des Erholungsfahrzeuges (100) installiert ist und sich in diesem Raum erstreckt.

26. Fahrzeug (100) nach Anspruch 25, wobei die Führung (2) einen Teil umfasst, der nahe bei einer Zugangstür (P) des Fahrzeuges selbst angeordnet ist.

27. Fahrzeug (100) nach dem vorhergehenden Anspruch 26, mit einem Hubsystem, um der behinderten Person das Besteigen des Fahrzeuges selbst zu erlauben.

28. Fahrzeug (100) nach einem der Ansprüche 25 bis 27, wobei sich die Führung (2) auch in dem Wohnraum desselben erstreckt.

29. Fahrzeug (100) nach einem der Ansprüche 25 bis 28, welches ein Fahrzeug ist, das aus der Gruppe ausgewählt ist, welche umfasst: Wohnmobile, Wohnwagen, Wasserfahrzeuge, Eisenbahnen, Flugzeuge, Busse, Straßenbahnen, Pullmanwagen und Kleinbusse.

## Revendications

1. Dispositif d'assistance (1) pour la mobilité des handicapés moteurs dans un véhicule de loisir (100) comme, par exemple, un camping-car, une caravane, un bateau, un train, un bus ou véhicule similaire, comprenant :
- un guide (2) apte à être installé dans l'espace de vie du véhicule de loisir (100) et s'étendant dans ledit espace ; et
- un moyen de support (3) apte à recevoir le corps d'un utilisateur, couplé ou pouvant être couplé audit guide (2) de manière à être mobile le long de ce dernier, l'agencement étant tel que l'utilisateur, supporté par ledit moyen de support (3), peut se déplacer dans l'espace de vie du véhicule de loisir (100),
**caractérisé en ce que** ledit guide (2) est apte à définir une pluralité de trajets alternatifs (24, 25) s'étendant dans l'espace de vie du véhicule de loisir (100).

2. Dispositif d'assistance (1) selon la revendication 1, dans lequel ledit guide (2) est apte à être installé dans une partie supérieure (T) de l'espace de vie du véhicule de loisir (100).

3. Dispositif d'assistance (1) selon la revendication 2, dans lequel ledit guide (2) est apte à être installé au plafond (T) du véhicule de loisir (100).

4. Dispositif d'assistance (1) selon la revendication 2 ou 3, dans lequel ledit guide (2) est apte à s'étendre sensiblement d'un bord à l'autre de toute la partie supérieure (T) de l'espace de vie du véhicule de loisir (100), afin de couvrir tous les lieux de ce dernier.

5. Dispositif d'assistance (1) selon l'une quelconque des revendications précédentes, dans lequel lesdits trajets alternatifs (24, 25) se croisent dans un ou plusieurs échangeurs (23) dudit guide (2).

6. Dispositif d'assistance (1) selon l'une quelconque des revendications précédentes, comprenant un moyen (4) pour coupler ledit moyen de support (3) audit guide (2), apte à permettre, quand le dispositif d'assistance (1) est installé dans le véhicule de loisir (100), un mouvement de translation dans une direction sensiblement horizontale du premier (3) par rapport à ce dernier (2).

7. Dispositif d'assistance (1) selon l'une quelconque des revendications précédentes, comprenant un moyen (4) pour coupler ledit moyen de support (3) audit guide (2), apte à permettre, quand le dispositif d'assistance (1) est installé dans le véhicule de loisir (100), un mouvement de translation dans une direction sensiblement verticale du premier (3) par rapport à ce dernier (2).

8. Dispositif d'assistance (1) selon l'une quelconque des revendications précédentes, comprenant un moyen (4) pour coupler ledit moyen de support (3) audit guide (2), apte à permettre, quand le dispositif d'assistance (1) est installé dans le véhicule de loisir (100), un mouvement de rotation du premier (3) par rapport à ce dernier (2).

9. Dispositif d'assistance (1) selon l'une quelconque des revendications précédentes, comprenant un moyen (4) pour coupler ledit moyen de support (3) audit guide (2), apte à permettre au premier (3) d'être suspendu à ce dernier (2).

10. Dispositif d'assistance (1) selon l'une quelconque des revendications précédentes, dans lequel ledit guide comprend au moins une piste (2).

11. Dispositif d'assistance (1) selon la revendication 10, comprenant un curseur (8) apte à s'engager dans ladite au moins une piste (2) pour coupler ledit moyen de support (3) audit guide (2).

12. Dispositif d'assistance (1) selon l'une quelconque des revendications précédentes, dans lequel ledit moyen de support (3) est apte à supporter un utilisateur dans une position assise.

13. Dispositif d'assistance (1) selon la revendication 12, dans lequel ledit moyen de support comprend un siège (3).

14. Dispositif d'assistance (1) selon l'une quelconque des revendications précédentes, dans lequel ledit moyen de support (3) est apte à supporter un utilisateur dans une position debout.

15. Dispositif d'assistance (1) selon l'une quelconque des revendications précédentes, dans lequel ledit moyen de support (3) comprend un harnais.

16. Dispositif d'assistance (1) selon l'une quelconque des revendications précédentes, comprenant un moyen (5) pour régler la hauteur dudit moyen de support (3) au-dessus du sol.

17. Dispositif d'assistance (1) selon la revendication 16, dans lequel ledit moyen de réglage de la hauteur comprend un système de courroies de longueur réglable (5).

18. Dispositif d'assistance (1) selon la revendication 16 ou 17, dans lequel ledit moyen de réglage (5) comprend un actionneur.

19. Dispositif d'assistance (1) selon l'une quelconque des revendications précédentes, comprenant un moyen (10) pour déplacer ledit moyen de support (3) par rapport audit guide (2).

20. Dispositif d'assistance (1) selon la revendication 19, dans lequel ledit moyen de déplacement (10) est apte à produire un mouvement de translation dudit moyen de support (3) le long dudit guide (2).

21. Dispositif d'assistance (1) selon la revendication 19 ou 20, dans lequel ledit moyen de déplacement (10) est apte à produire un mouvement de rotation dudit moyen de support (3) par rapport audit guide (2).

22. Dispositif d'assistance (1) selon l'une quelconque des revendications 19 à 21, dans lequel ledit moyen de déplacement comprend un moteur électrique (10).

23. Dispositif d'assistance (1) selon l'une quelconque des revendications 19 à 22, dans lequel ledit moyen de déplacement (10) est commandé à distance.

24. Ensemble prêt-à-monter comprenant un dispositif d'assistance (1) selon l'une quelconque des revendications précédentes, préparé pour être installé sur un véhicule de loisir (100) comme, par exemple, un camping-car, une caravane, un bateau, un train, un bus ou véhicule similaire.

25. Véhicule de loisir (100) comme, par exemple, un camping-car, une caravane, un bateau, un train, un autocar, une fourgonnette, un bus, un tramway, un aéronef ou véhicule similaire, comprenant un dispositif d'assistance (1) pour la mobilité des handicapés moteurs dans le véhicule selon l'une quelconque des revendications 1 à 23, dans lequel ledit guide (2) est installé dans l'espace de vie du véhicule de loisir (100) et s'étend dans cet espace.

26. Véhicule (100) selon la revendication 25, dans lequel ledit guide (2) comprend une partie disposée près d'une porte d'accès (P) du véhicule.

27. Véhicule (100) selon la revendication 26, comprenant un système de levage pour permettre à la personne handicapée d'accéder au véhicule.

28. Véhicule (100) selon l'une quelconque des revendications 25 à 27, dans lequel ledit guide (2) s'étend aussi dans la cabine de conduite de celui-ci.

29. Véhicule (100) selon l'une quelconque des revendications 25 à 28, qui est un véhicule choisi dans un groupe comprenant : les camping-cars, les caravanes, les bateaux, les trains, les aéronefs, les bus, les trams, les autocars et les fourgonnettes.
